# EUROPEAN PATENT APPLICATION

(11) **EP 0 945 930 A1**
(43) Date of publication of application: **29.09.1999**
(21) Application number: 99302449.6
(22) Date of filing: 29.03.1999
(51) Int. Cl.: H01R 13/713, H01R 25/00

(54) **Electrical risk monitoring device**

(30) Priority: 27.03.1998 GB 9806648
(71) Applicant: Compliance Technology Limited, Enfield, Middlesex EN3 7XU (GB)
(72) Inventor: Fuller, Derek Edward Henry, Ware, Herts SG12 0HN (GB)
(74) Representative: Tribe, Thomas Geoffrey

(57) **Abstract**

An electrical risk monitor unit for installation between an a.c. mains power source and an a.c. mains powered appliance comprising a housing, a power inlet connection means, and at least one power outlet connection means each being mounted in said housing and being accessible to externally connectable connector means, and there being directly wired links between inlet and outlet connection means in the form of a Live to Live connector link, a Neutral to Neutral connector link and an Earth to Earth connector link, characterised in that said housing incorporates a detector circuit including an upstanding toroidal transformer, said Live to Live connector link and said Neutral to Neutral connector link passing through said toroidal transformer and the detector circuit is arranged to provide an indication when an imbalance occurs in any currents through said Live to Live and said Neutral to Neutral connector links, and further characterised in that the power inlet connection means and the output connection means are arranged adjacently in a wall of said housing so enabling the connector links other than those passing through said upstanding toroidal transformer to be direct busbar links.

## Description

The present invention relates to electrical risk monitoring devices. Such devices may be used for the monitoring of equipment supplied from commercial and industrial a.c. mains power source output wall or floor or other mounted sockets. Such equipment typically may be industrial process control, medical or information technology devices including computers and their peripherals.

Where such equipment is in use within a particular area or room in a commercial or a light industrial environment, there may be a number of electrical appliances in use either with or without operators for these appliances. In order to protect both appliances and operators it is desirable to provide some form of continuous monitoring of the electrical safety of both the appliances themselves and the a.c. mains power source. This is to ensure that mis-connection or breakdown of the main supply does not present a safety hazard to the operator or maintenance staff, and that insulation breakdown within the appliances or their interconnecting cables does not present a fire hazard to the appliances or any electrical shock hazard to the operators. In addition it may be desirable to reduce or limit electrical disturbances appearing on the mains input supply to the appliances from corrupting data stored in or processed by the appliance.

The a.c. mains power source to the appliances will consist of a Live and Neutral supply with or without an Earth connection. It has been previously proposed that the current through the Live and Neutral lines should be continuously monitored and where an unacceptable difference occurs, a warning may be activated. This warning desirably should be both visible and audible, and may be displayed either locally in the region of the appliance or remotely.

It is noted in this context, that the invention is more concerned with monitoring of devices than with protecting such devices. Thus, a protective device may have an automatic trip system, whereas a monitoring system warns of a fault condition without necessarily shutting the equipment down. This may be important if a computer is running and contains unsaved data which needs to be saved before the computer can be shut down. In the present invention monitoring is the main function of the device and protection is an optional secondary feature.

The present invention aims to provide such a monitoring unit which is easy to install, easy to manufacture and easy to operate.

According to the present invention there is provided an electrical risk monitor unit for installation between an a.c. mains power source and an a.c. mains powered appliance comprising a housing, a power inlet connection means, and at least one power outlet connection means each being mounted in said housing and being accessible to externally connectable connector means, and there being directly wired links between inlet and outlet connection means in the form of a Live to Live connector link, a Neutral to Neutral connector link and an Earth to Earth connector link, characterised in that said housing incorporates a detector circuit including an upstanding toroidal transformer, said Live to Live connector link and said Neutral to Neutral connector link pass through said toroidal transformer and the detector circuit is arranged to provide an indication when an imbalance occurs in any currents through said Live to Live and said Neutral to Neutral connector links, and further characterised in that the power inlet connection means and the output connection means are arranged adjacently in a wall of said housing so enabling the connector links other than those passing through said upstanding toroidal transformer to be direct busbar links.

The indication may be in the form of an audible or visible alarm which can be displayed either locally or remotely or both, which is triggered when the imbalance reaches a pre-set limit or it may be a measure of the level of imbalance giving an increasing indication corrresponding to an increasing level of imbalance. There can be a plurality of pre-set limits including at least one at a lower level at which an alarm is triggered and one at a higher level at which the a.c. mains power supply is arranged to be cut off.

Generally the inlet connection means will be either a three pin panel mounted connector to receive an a.c. mains power cord set or it will be a fixed lead and an a.c. mains power plug; and the or each power outlet connection means will be a panel mounted socket connector. Such plug and socket connectors for personal computers are usually of a standard configuration, but the a.c. mains power plug design will vary dependent on the country.

The detector circuit may be incorporated on a printed circuit board which carries the toroidal transformer in a manner which enables the live and neutral links to be readily threaded through the centre of the toroidal core during assembly. To this end, it is preferable that the power inlet and outlet connection means are mounted on an upstanding wall of the component housing and that the toroidal core lies in a plane perpendicular to said wall.

The detector circuit can be arranged to perform a number of functions:
- detection of live and neutral connections being reversed at the a.c. mains power socket
- detection of disconnection of the Earth connection at the mains a.c. mains power socket (unless a secondary Earth path fault exists)
- detection of disconnection of the Neutral connection at the a.c. mains power socket
- detection of an excess voltage between the Neutral and Earth connections
- detection of an excess leakage current from the attached appliances and their corresponding cord sets
- disconnection of the Live and Neutral lines within the circuit on the detection of an Earth leakage current in excess of a level which creates a safety hazard, for example if Earth leakage current exceeds 30mA. This disconnection feature is optional dependent on the usage requirement.

Each of these functions can be arranged to trip either or both an audible and a visible alarm circuit, indicating that all appliances connected to the unit should be progressively shut down and a maintenance engineer called to assess the type of fault and to correct it, and optionally as mentioned above trip the Live and Neutral lines if a hazardous condition arises.

Conveniently spike suppression means can be directly wired between live, neutral and earth within the unit.

The unit can be inserted between the normal a.c. mains power plug and socket input of the equipment to be monitored and may be attached to that equipment by commercially available fabric fasteners, or be attached by screws to a convenient surface or may sit on a horizontal surface via non-slip feet. Thus, the unit has the advantage that it can be connected to existing equipment without any modification to that existing equipment being necessary.

An embodiment of the invention will now be described by way of example with reference to the accompanying diagrammatic drawings in which:
Figures 1 and 2 show plan and side elevations of a unit in accordance with the invention;

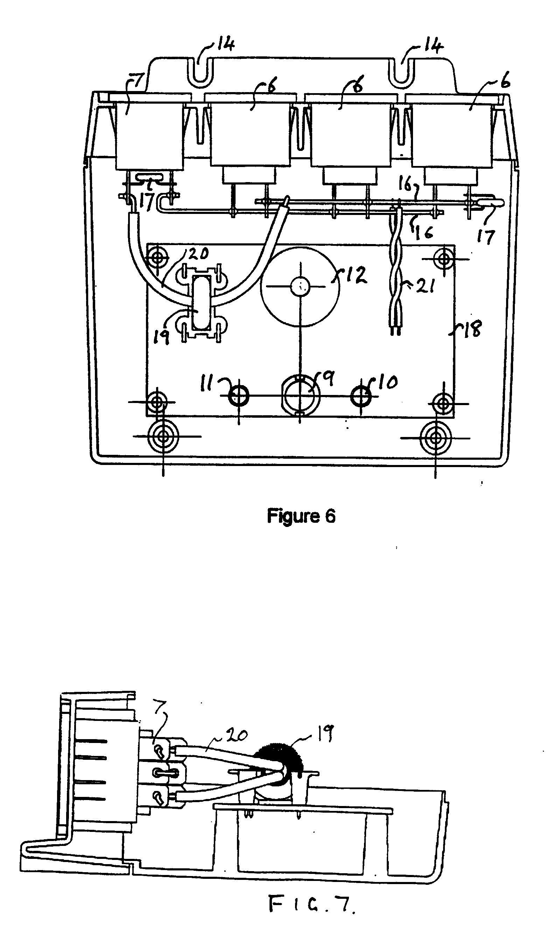

Figures 3 and 4 show alternative forms of the input connections to the unit in end elevation;
Figure 5 shows a fragmentary plan view of the Figure 4 arrangement showing a fixed mains lead;
Figure 6 shows a plan view of the unit with cover removed;
Figure 7 shows a side elevation of the unit with cover removed;
Figure 8 shows a schematic arrangement of the unit as attached between an a.c. mains power socket and several appliances;
Figure 9 shows a functional block diagram of the unit;
Figure 10 shows the actual circuit diagram of the above functional block diagram; and
Figure 11 shows an alternative to the Figure 6 arrangement where the circuit board is vertical.

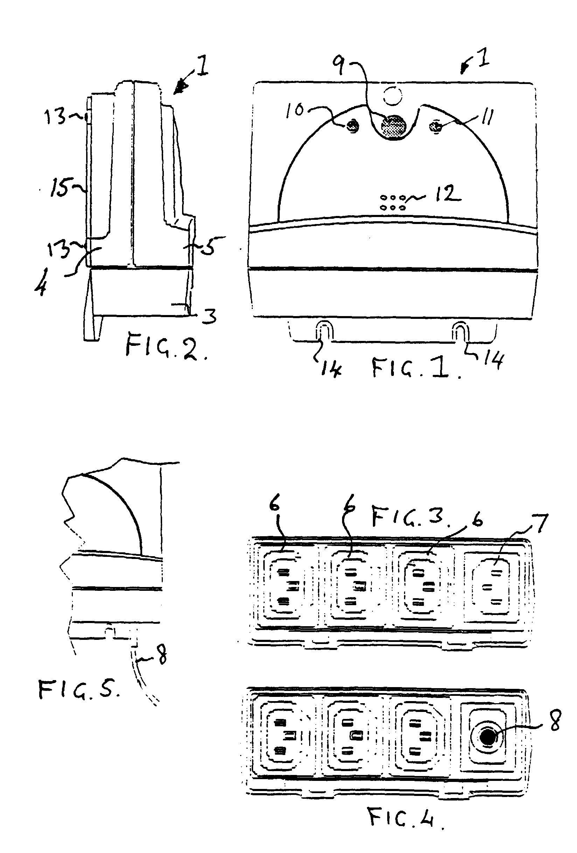

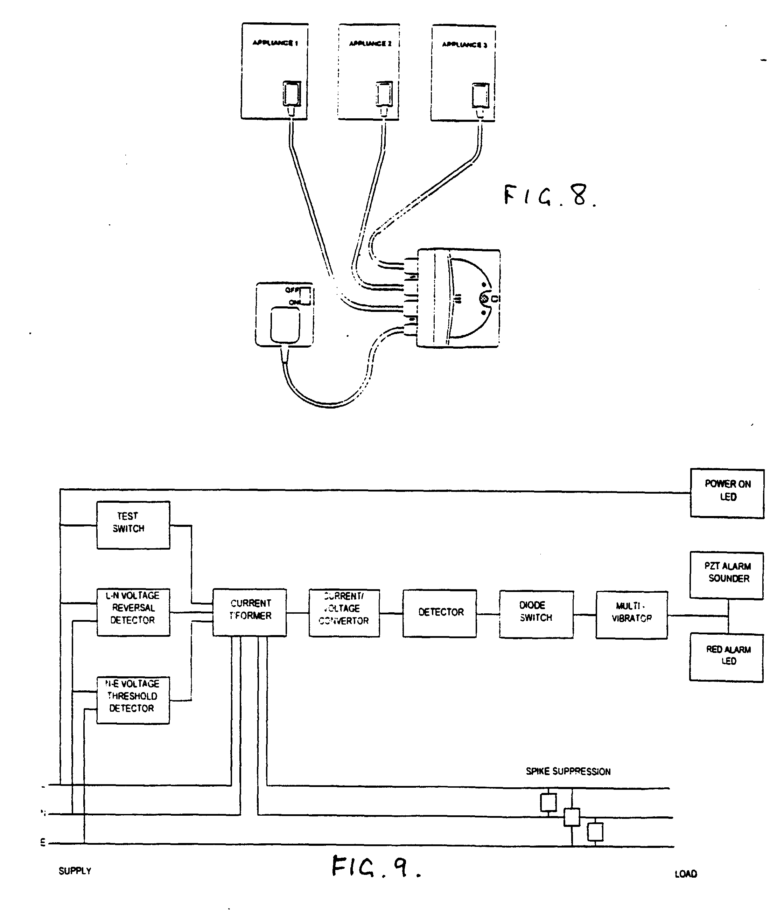

Referring to Figures 1 and 2, a housing 1 comprises a series of plastics mouldings 3, 4, 5 which are snapped and screwed together. These enclose electrical functions of the unit and ensure a safe working environment for users. A first of these mouldings 3 includes an upstanding wall which supports a series of output sockets 6 which enables the unit to be connected to one or more electrical or electronic appliances by interconnecting cord sets as shown in Figure 8. The same moulding houses on the upstanding end wall, as one possibility a panel mounted inlet plug 7 through which power is fed to the unit by an a.c. mains supply cord through which power is fed to the appliances. Alternatively (see Figures 4 and 5) a fixed mains input power cord 8 may be connected directly within the unit.

Referring back to Figure 1, the unit allows a user to test key electrical components and related functionality of the unit by depressing a test button 9 on the upper surface of the housing. A mains indicator 11 is fitted to one side of the test button and a warning indicator 10 is fitted at the other side of the test button. An outlet for an audible alarm 12 is in the form of a series of holes or depressions in the top of the moulding.

The housing also contains components which reduce the level of electrical spikes appearing through the mains connection which can degrade appliance performance.

The unit may be positioned for use in a number of ways. It can be supported on a horizontal surface via non-slip feet 13, it may be screwed to any reasonably flat and convenient horizontal or vertical surfaces via screw apertures 14 or it may be mounted on any suitable horizontal or vertical surface via fabric fasteners such as VELCRO (Registered Trade Mark), 15.

Referring to Figures 6 and 7, the assembly of the components within the housing can be seen. The three output sockets 6 have their Live Neutral and Earth connectors strapped in parallel by bus bars 16. Spike suppresors 17 are connected across each of the respective terminals.

A printed circuit board 18 is mounted to the base of the unit and therefore is perpendicular to a plane containing the inlet connector 7 and the outlet connector 6. The printed circuit board contains the test button 9, the mains "on" indicator 11, and the warning indicator 10, previously mentioned as well as the audible alarm 12. An alternative arrangement is shown in Figure 11 where the printed circuit board is attached to an end wall and so is parallel to the upstanding end wall containing the output sockets 6.

Also mounted on the printed circuit board in an upstanding condition transverse to the plane of the wall carrying the input socket 7 and the output sockets 6 is a toroidal current transformer 19 including windings connected within a circuit on the printed circuit board 18 and also two Live and Neutral links 20 carrying the full load current of the circuit between the input plug 7 and the output sockets 6. They each form one-turn windings of the toroidal transformer. Also connected between the bus-bars and the printed circuit board are low current connections 21 providing power to drive the electronic monitoring circuits on the printed circuit board and serving as connections to enable the correct connections of the Live, Neutral and Earth a.c. mains power connections to be checked and monitored.

The unit is suitable for operation from the European Standard supply of 230 V AC single phase (Þ 10% plus a further 10 V drop in building wiring) and can readily be modified by changes in component values to operate on other voltages as occur in other countries such as the United States of America. The unit as described consumes a nominal 4 mA in the quiescent condition and 6 mA in the alarm mode and a green LED LD1, confirms the flow of this current and constitutes the mains indicator 10.

The incoming supply 7 is connected to the live (L), neutral (N), and earth (E) terminals on the printed circuit board and, in addition, as already described the pair of Live and Neutral conductors pass through the centre of the toroidal current transformer 19 to feed the load output sockets 6 of the unit.

Half-wave rectification of the supply to the circuitry is provided by diode D1, with diode D3 providing continuity to the neutral supply terminal. Resistor R4 provides a nominal voltage drop before regulation to 15 V is provided by transistor Q1 and zener diode ZD1,

Warning of unequal live and neutral currents (indicating the existence of an earth leakage current) in the attached appliances and their interconnection cables is provided by the pair of conductors passing through the current transformer, TR1, whose 40-turn secondary winding feeds the non-inverting input of integrated circuit 1C1A. The gain of this lC is set by resistor R10 to provide the level of alarm threshold required (20mA unbalance in the conductors passing through TR1).

The output from the current transformer feeds the virtual earth provided by the inverting input of the operational amplifier, whose output is rectified by transistor Q2 providing an output which pumps down the voltage on diode D4 to switch the multivibrator 1C1B. This multivibrator determines the cadence of the audible alarm 12 in the form of a piezo-electric transducer (PZT) incorporating an internal audio oscillator) and the warning indicator 11 is a red light emitting diode (LED)producing both audible and visual warning of abnormal conditions.

Additional circuits detect reversal of live and neutral supply conductors, a disconnected Earth connection, or disconnected Neutral connection. These are fed to a 180-turn tertiary winding on the current transformer 19, any current being transferred to the secondary winding and raising alarms as previously described. Reversal of Live and Neutral is electrically the same condition as connecting the Earth terminal to the Live one, applying the supply voltage between the Earth and Neutral terminals. Zener diode ZD1 limits the Earth to Neutral voltage at which current will flow in TR1, so that Earth to Neutral voltages less than a set value will have no effect.

Finally, the test button 9 is used to apply a half-wave ac signal to the 180-turn winding of TR1 to simulate fault conditions for reassurance of correct operation.

The unit alarm circuit is triggered by an input current exceeding 20 mA rms to the single-turn winding on the current transformer TR1 or by 110 óA to the 180-turn winding. The single-turn winding is provided, in practice, by the "live and neutral pair" feeding the output whose leakage-current is being monitored. The 180-turn winding links any abnormality in the "Live", "Neutral" and "Earth" connections to the monitoring circuit through the 40 turn winding.

The normal "earth to earth" supply circuit will present an input of up to 40 volts from an impedance of up to 1600 ohms and this will be isolated from TR1 by the diodes D2 and Zener diode ZD1. If these values are exceeded, current will flow through R1 into TR1 and the alarm will be triggered. A consequence of this circuit arrangement is a residual earth leakage current through resistor R1 (1 MΩ). Reversal of the "Live" and "Neutral" lines will also create alarm status, since this is effectively the same as presenting < 40 V at < 1600 ohms between Live & Earth, and the unit will "see" a high voltage between its true Earth and Neutral terminals.

Finally, if the "Neutral" line becomes disconnected, the return current of the unit flows to the "Earth" terminal, passing through the 180-turn winding of the current transformer, hence creating the alarm condition.

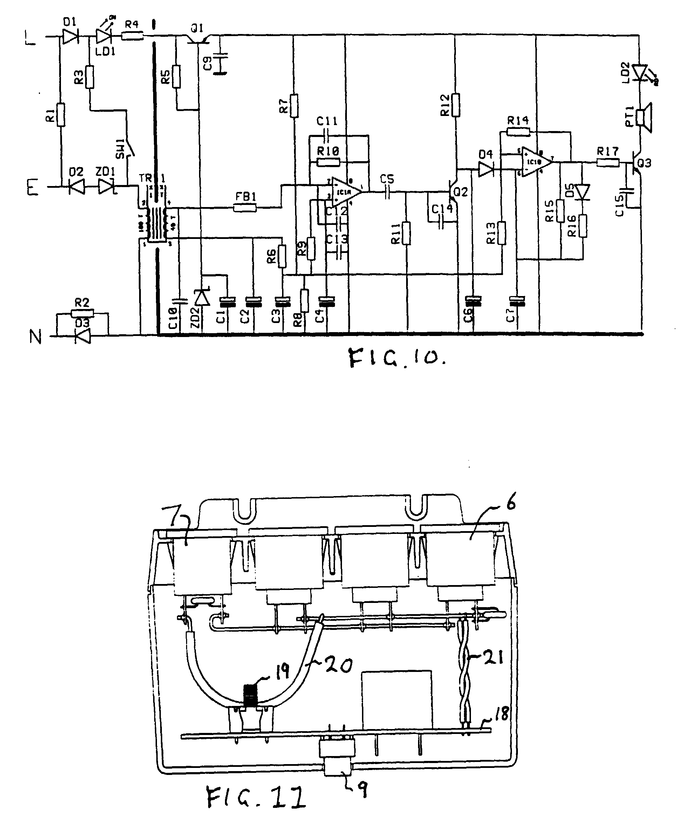

For the purpose of meeting the European Directives and FCC Regulations on electromaqnetic compatibility, the printed circuit board is partitioned in a particular manner, one part of the board being produced as a single sided PCB and the remainder as a double sided PCB. The circuit diagram Figure 10 shows the partitioning of the circuit, with components and connections to the right of the centre of the current transformer being connected to a reference plane which covers that portion of the printed board over which the said components are mounted. Components as necessary are connected directly to the reference plane, thereby reducing the liability of the circuit to pick up radiated emissions in the bands from 26MHz to 2GHz and conducted emissions from 100kHz to 30 MHz. Bypass and decoupling capacitors are applied as necessary, being specifically capacitors C9, C10, C11, C12, C13, C14 and C15. In addition a ferrite bead FB1 is connected between the output of the secondary winding on the current transformer and the non-inverting input of the operational amplifier 1C1A.

Although not shown in the described embodiment, a higher level discriminator circuit can be provided where an excess level of Earth leakage current is monitored. In this event, for example at an Earth leakage current greater than 40 ma, the Live and Neutral lines can be arranged to be tripped automatically.

## Claims

1. An electrical risk monitor unit for installation between an a.c. mains power source and an a.c. mains powered appliance comprising a housing, a power inlet connection means, and at least one power outlet connection means each being mounted in said housing and being accessible to externally connectable connector means, and there being directly wired links between inlet and outlet connection means in the form of a Live to Live connector link, a Neutral to Neutral connector link and an Earth to Earth connector link, characterised in that said housing incorporates a detector circuit including an upstanding toroidal transformer, said Live to Live connector link and said Neutral to Neutral connector link passing through said toroidal transformer and the detector circuit is arranged to provide an indication when an imbalance occurs in any currents through said Live to Live and said Neutral to Neutral connector links, and further characterised in that the power inlet connection means and the output connection means are arranged adjacently in a wall of said housing so enabling the connector links other than those passing through said upstanding toroidal transformer to be direct busbar links.

2. An electrical risk monitor unit according to Claim 1, in which said detector circuit is incorporated in a printed circuit board which carries said toroidal transformer in an upstanding disposition so as to lie in a plane perpendicular to the wall of the said housing in which said inlet and outlet connection means are mounted.

3. An electrical risk monitor unit according to Claim 1 or Claim 2 in which said detector unit is connected between Live, Neutral and Earth connector links so as to be powered thereby and is arranged to monitor correct connection of Live, Neutral and Earth as between any attached appliance and the a.c. mains power source.

4. An electrical risk monitor unit according to any preceding claim in which there is a plurality of power outlet connection means which are connected in parallel by bus bar connections.

5. An electrical risk monitor unit according to Claim 3 or 4 in which said toroidal transformer has a winding connected between Neutral and Earth and the detector circuit is arranged to detect a misconnection in dependence on an output from said winding.

6. An electrical risk monitor unit according to any preceding claim in which said imbalance is arranged to trigger an alarm when the imbalance is greater than a predetermined level.

7. An electrical risk monitor unit according to any preceding claim in which at a pre-set level of Earth leakage current which is indicative of a safety hazard the unit is arranged to cut off the a.c. mains power Live and Neutral supply lines within the unit.

8. An electrical risk monitor unit according to any preceding claim in which the toroidal current transformer has a primary winding circuit for detecting earth leakage due to the difference in current between Live and Neutral connections, and a secondary winding circuit for detecting disconnection of the Earth or Neutral connections and for detecting reversal of the Live and Neutral connections.

9. An electrical risk monitor unit according to any preceding claim in which a zener diode is provided to prevent false tripping due to abnormally high Earth to Neutral voltages.

10. An electrical risk monitor according to any of Claims 8 or 9 in which a ferrite bead and associated components are provided in the secondary winding circuit to reduce the liability of the circuit to pick up unwanted spurious emissions in selected frequency bands.
